# EUROPÄISCHE PATENTSCHRIFT

(11) **EP 2 317 298 B1**
(45) Veröffentlichungstag und Bekanntmachung des Hinweises auf die Patenterteilung: **05.12.2012**
(21) Anmeldenummer: 09013513.8
(22) Anmeldetag: 27.10.2009
(51) Int. Cl.: G01M 3/04

(54) **Dichtigkeitsprüfungsanordnung**
Fluid tightness testing assembly
Agencement de vérification de l'étanchéité

(43) Veröffentlichungstag der Anmeldung: 04.05.2011
(73) Patentinhaber: DÖLCO-Exquisit, 79112 Freiburg (DE)
(72) Erfinder: Dörle, Alfred, 79112 Freiburg (DE)
(74) Vertreter: Otten, Herbert

(56) Entgegenhaltungen:
- DE-T2- 60 121 510
- DE-U1-202005 003 160
- US-A- 2 642 739

## Beschreibung

Die Erfindung betrifft eine Dichtigkeitsprüfungsanordnung gemäß dem Oberbegriff des Anspruchs 1.

Unter der Bezeichnung RG 3 wird von der Firma DÖLCO eine Dichtigkeitsprüfungsanordnung vertrieben, welche zur Prüfung von mit einer Abdichtschicht bedeckten Bauteilen vorgesehen ist und einen Koffer umfasst, in welchem ein Druckluft-Nebelgas-Strom erzeugbar ist, welcher zu einer nach außen gerichteten Anschlusskupplung geleitet wird. Bei einer derartigen Dichtigkeitsprüfungsanordnung wird der in dem Koffer erzeugte Nebelgasstrom mittels eines Schlauchs unter die zu prüfende Abdichtschicht geleitet.

Aus der Gattungsbildenten Druckschrift DE 601 21 510 T2 ist ein Verfahren zur Prüfung der Dichtigkeit einer Dichtung in einer Betonstruktur bekannt geworden. Die Druckluft wird von einer Pumpanlage über eine flexible Druckleitung zu einer Anschlusskupplung mit einem starren Einstechrohr geleitet. Das Einstechrohr wird manuell durch eine Abdichtungsmasse in einer Fuge geführt um Druckluft unterhalb der Abdichtmasse einzuleiten. Sofern die Abdichtmasse porös ist, wird dies anhand von sich bildenden Seifenblasen erkannt. Eine manuelle Bedienung des Einstechrohrs ist zwingend erforderlich.

Aus dem Dokument US 2,642,739 ist ein Verfahren zum Prüfen des Mantels eines ummantelten elektrischen Kabels und eine zugehörige Druckprüfeinrichtung zur Ausführung des Verfahrens bekannt geworden. In ein vorgestanztes Loch wird hierfür ein konisches Teil mit Luftzuführungsbohrung eingeschraubt. Etwaige Druckdifferenzen zwischen Außenluft und Druck innerhalb des Kabels werden detektiert.

Aus dem Dokument DE 20 2005 003 160 U1 ist eine Dichtigkeitsprüfungsanordnung bekannt geworden, bei welcher der erforderliche Druckluftstrom und ein Nebelgasstrom in unterschiedlichen Anlagen erzeugt und unterhalb einer Abdichtschicht eingebracht werden. Hier handelt es sich um eine baulich große Dichtigkeitsprüfungsanordnung, die nicht als Handgerät mit insbesondere einer Einhandbedienung betätigt werden kann.

Der Erfindung liegt die Aufgabe zugrunde, eine Dichtigkeitsprüfanordnung zu entwickeln, welche vom Anwender mit minimalem Aufwand zu unterschiedlichen Einsatzorten transportierbar ist und die in ihrer Gesamtheit mit einer Hand zu tragen und zu bedienen ist.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Die erfindungsgemäße Dichtigkeitsprüfungsanordnung umfasst ein starres Einstechrohr, welches an die Anschlusskupplung des Koffers anschließbar ist, wobei das Einstechrohr in seinem angeschlossenen Zustand in einer festen und starren Position zu der Anschlusskupplung steht, wobei eine Spitze des Einstechrohrs den Koffer um eine Einstechtiefe hervorsteht und wobei das Einstechrohr beim Aufsetzen oder Heranschieben des Koffers auf die Oberfläche des Bauteils zum Eindringen in die Abdichtschicht und zum Durchdringen einer wasserdichten sperrschicht der Abdichtschicht dient. Bei einer derartigen Dichtigkeitsprüfungsanordnung ist es für den Anwender möglich, die gesamte Dichtigkeitsprüfungsanordnung mit einer Hand zu tragen und nicht wie bislang erforderlich, in einer Hand den Koffer und in der anderen Hand den Schlauch zu tragen. Kern der Erfindung ist somit die Entwicklung einer Dichtigkeitsprüfungsanordnung mit einem Weiterleitungsmittel, welches durch seine starre Ausführung in seiner Baugröße wesentlich reduziert und somit leicht transportabel ist.

Eine erste Ausführungsvariante der Erfindung sieht vor, das Einstechrohr an der Anschlusskupplung des Koffers mit unterschiedlichen Winkeln zu der zu prüfenden Abdichtschicht fixierbar ist. Hierdurch ist ein Maß einstellbar, mit welchem das Einstechrohr über den Koffer hinaus in die Abdichtschicht hineinragt. Somit kann für Abdichtschichten und insbesondere für Abdichtschichten, welche als Flachdachabdichtschicht ausgebildet sind, die optimale Einstechtiefe durch die Winkelstellung, in welcher das Einstechrohr an dem Koffer fixiert wird, vorbestimmt werden. Eine Dichtigkeitsprüfungsanordnung mit einem derartigen, verschwenkbaren Einstechrohr ist somit sowohl für Flachdachabdichtschichten, welche eine dünne Kiesauflage umfassen, als auch für Flachdachabdeckschichten, welche eine dicke Humusauflage umfassen, geeignet, da durch die richtige Vorwahl des Winkel, in welchem das Einstechrohr zu einer Orthogonalen der Flachdachabdichtschicht steht, ein gezieltes Durchstechen der wasserdichten Sperrschicht der Flachdachabdichtschicht gewährleistet ist.

Eine zweite Ausführungsvariante des Erfindungsgegenstandes sieht vor, die Anschlusskupplung an einer Seitenwand, insbesondere einer Seitenwand des Koffers in unterschiedliche Positionen verschiebbar anzuordnen. Hierdurch ist durch eine einfache Verfahrbewegung ein Maß einstellbar, mit welchem das Einstechrohr in orthogonaler Richtung in eine Abdichtschicht eingestochen wird.

Eine dritte Ausführungsvariante sieht vor, an dem Koffer mehrere Anschlusskupplungen in unterschiedlicher orthogonaler Entfernung zu der Abdichtschicht, auf welcher der Koffer aufliegt, anzuordnen. Auch hierdurch ist einfach eine Einstechtiefe einstellbar, mit welcher das Einstechrohr in orthogonaler Richtung in die Abdichtschicht eingestochen wird.

Eine vierte Ausführungsvariante des Erfindungsgegenstands sieht vor, das Einstechrohr teleskopierbar auszubilden. Ein derartiger Aufbau erlaubt ebenfalls eine einfache Einstellung der Einstechtiefe, mit welcher das Einstechrohr in orthogonaler Richtung in die Abdichtschicht eingestochen wird.

Eine fünfte Ausführungsvariante des Erfindungsgegenstandes sieht vor, für die Dichtigkeitsprüfungsanordnung mehrere Einstechrohre mit unterschiedlicher Länge vorzusehen. Auch hierdurch ist die Einstechtiefe einfach vorwählbar, mit welcher das Einstechrohr in orthogonaler Richtung in die Abdichtschicht eindringt.

Die Erfindung sieht weiterhin vor, eine Einstechtiefe, mit welcher das Einstechrohr über den Koffer hinaus orthogonal in die zu prüfende Abdichtschicht bei einer gewählten Stellung hineinragt, in Abhängigkeit von dem verwendeten Einstechrohr an einer auf dem Koffer befindlichen Tabelle ablesbar zu machen. Hierdurch kann eine zuvor aus Plänen ermittelte oder gemessene erforderliche Einstichtiefe ohne weitere Hilfsmittel an der Dichtigkeitsprüfungsanordnung eingestellt werden.

Erfindungsgemäß ist es auch vorgesehen, die Dichtigkeitsprüfungsanordnung mit einer Fernsteuerung auszustatten, mit welcher insbesondere das Einleiten des Druckluft-Nebelgas-Stroms in die Abdichtschicht steuerbar bzw. regelbar ist. Hierdurch ist zum einen ein besonders sparsamer Umgang bei der Erzeugung des Druckluft-Nebelgas-Stroms möglich, da dieser ferngesteuert nur bei Bedarf erzeugt wird und zum anderen ist es möglich, dass einen Einzelperson in der Lage ist die Dichtigkeitsprüfung ohne Helfer durchzuführen und insbesondere auch zu Dokumentieren, da sich die Einzelperson während der Dichtigkeitsprüfung frei bewegen kann.

Weitere Einzelheiten der Erfindung werden in der Zeichnung anhand von schematisch dargestellten Ausführungsbeispielen beschrieben.

Hierbei zeigt:
- Figur 1:: eine Dichtigkeitsprüfungsanordnung, welche für die Prüfung einer Abdichtschicht mit einer dicken Auflage eingestellt ist;
- Figur 2:: die in der Figur 1 gezeigte Dichtigkeitsprüfungsanordnung, wobei die Dichtigkeitsprüfungsanordnung für die Prüfung einer Abdichtschicht mit einer mitteldicken Auflage eingestellt ist und
- Figur 3:: die in der Figur 1 gezeigte Dichtigkeitsprüfungsanordnung, wobei die Dichtigkeitsprüfungsanordnung für die Prüfung einer Abdichtschicht ohne Auflage eingestellt ist.

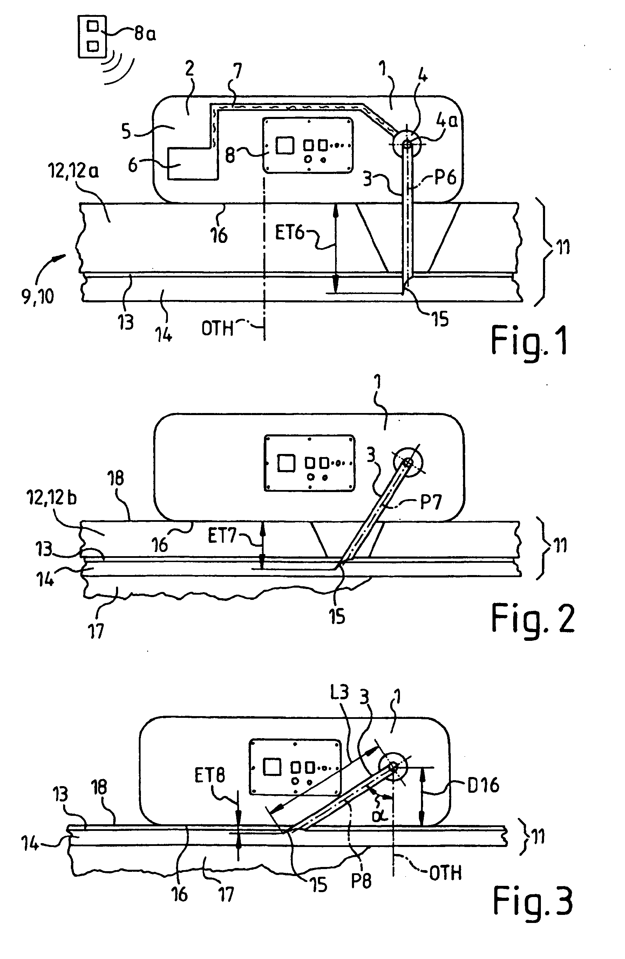

In der Figur 1 ist eine erfindungsgemäße Dichtigkeitsprüfungsanordnung 1 in Seitenansicht gezeigt. Die Dichtigkeitsprüfungsanordnung 1 umfasst im Wesentlichen einen Koffer 2 und ein Einstechrohr 3. Das Einstechrohr 3 ist über eine Anschlusskupplung 4 angeschlossen, wobei die Anschlusskupplung 4 an einer Seitenwand 5 des Koffers 2 angeordnet ist. In dem Koffer 2 ist eine symbolisch dargestellte Einheit 6 zur Erzeugung eines Druckluft-Nebelgas-Stroms 7 angeordnet. Die Einheit 6 leitet den Druckluft-Nebelgas-Strom 7 zu der Anschlusskupplung 4, welche zum Beispiel als Gewindekupplung oder als Bajonettkupplung ausgebildet ist. Zur Steuerung bzw. Regelung der Einheit 6 dient ein in die Seitenwand 5 des Koffers 2 eingelassenes Anzeige- und Bedienfeld 8 alternativ ist die Einheit 6 zur Erzeugung des Druckluft-Nebelgas-Stroms 7 auch mittels einer Fernsteuerung 8a steuer- bzw. regelbar ist. Das Einstechrohr 3 weist eine auf die Anschlusskupplung 4 des Koffers 2 angepasste Gegenkupplung 4a auf, mit welcher es starr und unverdrehbar an der Anschlusskupplung 4 des Koffers 2 wie ein Stundenzeiger einer Uhr in beliebigen Positionen bzw. Stellungen fixierbar ist. In der Figur 1 ist das Einstechrohr 3 in einer 6-Uhr-Position P6 fixiert. In der Darstellung der Figur 1 ist weiterhin ein Bauteil 9 gezeigt, welches als Dach 10 ausgeführt ist, wobei von dem Dach 10 lediglich eine Abdichtschicht 11 gezeigt ist. Die Abdichtschicht 11 besteht im Wesentlichen aus einer Auflage 12, welche als dicke Humusauflage 12a ausgebildet ist, einer wasserdichten Sperrschicht 13 und einer Dämmschicht 14. Das Einstechrohr 3 weist in seiner 6-Uhr-position P6 eine Einstechtiefe ET6 auf, bei welcher es die dicke Humusauflage 12a vollständig durchsticht und mit einer Spitze 15 auch noch die wasserdichte Sperrschicht 13 durchdringt, um den Druckluft-Nebelgas-Strom 7 unter die Sperrschicht 13 leiten zu können. Im Sinne der Erfindung wird unter der Einstechtiefe die Tiefe verstanden, um welche das Einstechrohr 3 in orthogonaler Orientierung zu der Abdichtschicht 11 in diese eindringt. In dem in der Figur 1 dargestellten Ausführungsbeispiel ist das Einstechrohr 3 parallel zu einer Orthogonalen OTH ausgerichtet, welche senkrecht auf der Abdichtschicht 11 steht. In der dargestellten 6-Uhr-Position des Einstechrohrs 3 ist die größte Einstechtiefe realisierbar. Während des Prüfungsvorgangs liegt der Koffer 2 mit seiner Bodenwand 16 auf der Abdichtschicht 11 auf. Somit wird der Anwender beim Einstechen des Einstechrohrs 3 in die Abdichtschicht 11 durch das Gewicht des Koffers 2 unterstützt, da das Einstechrohr 3 zuvor drehfest an dem Koffer 2 bzw. an dessen Anschlusskupplung 4 fixiert wurde.

In der Figur 2 ist nun dargestellt wie eine weitere Abdichtschicht 11, bei welcher eine wasserdichte Sperrschicht 13 durch eine Auflage 12 geschützt wird, welche als mitteldicke Kiesauflage 12b ausgebildet ist, mit der in der Figur 1 beschriebenen Dichtigkeitsprüfungsanordnung 1 geprüft wird. Um die Abdichtschicht 11 mit dem Einstechrohr 3 nicht zu tief zu durchstoßen und beispielsweise dessen Spitze 15 an einer Betonschicht 17 zu beschädigen, welche unter einer Dämmschicht 14 liegt, wurde das Einstechrohr 3 vor dem Einstechen der Dichtigkeitsprüfungsanordnung 1 auf eine 7-Uhr-Position P7 gestellt und in dieser fixiert. Hierdurch ist die Einstechtiefe gegenüber der in der Figur 1 gezeigten Einstechtiefe ET6 auf ein Einstechtiefe ET7 reduziert. Wie auch in der Figur 1 gezeigt liegt der Koffer 2 während der Dichtigkeitsprüfung mit seiner Bodenwand 16 auf einer Oberfläche 18 des Bauteils 9 auf.

In der Figur 3 ist nun dargestellt wie eine weitere Abdichtschicht 11, bei welcher eine wasserdichte Sperrschicht 13 nicht durch eine Auflage geschützt wird und beispielsweise als frei liegende Dachpappe ausgebildet ist, mit der in der Figur 1 beschriebenen Dichtigkeitsprüfungsanordnung 1 geprüft wird. Um die Abdichtschicht 11 mit dem Einstechrohr 3 nicht zu tief zu durchstoßen und beispielsweise dessen Spitze 15 an einer Betonschicht 17 zu beschädigen, wurde das Einstechrohr 3 vor dem Einstecken auf eine 8-Uhr-Position P8 gestellt und in dieser fixiert. Hierdurch ist die Einstechtiefe gegenüber der in der Figur 2 gezeigten Einstechtiefe ET7 weiter auf eine Einstechtiefe ET8 reduziert. Wie auch in den Figuren 1 und 2 gezeigt liegt der Koffer 2 während der Dichtigkeitsprüfung mit seiner Bodenwand 16 auf einer Oberfläche 18 des Bauteils 9 auf.

Die Einstechtiefe ET8 lässt sich bei Kenntnis einer Länge L3 des Einstechrohrs 3, bei der Kenntnis eines Winkels α in welchem das Einstechrohr 3 zu einer Orthogonalen OTH, die auf der Abdichtschicht 11 steht, und bei Kenntnis des Abstands D16 zwischen der Anschlusskupplung 4 und der Bodenwand D16 des Koffers 2 in Richtung der Orthogonalen OTH einfach berechnen.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Dichtigkeitsprüfungsanordnung
- 2: Koffer
- 3: Einstechrohr
- 4: Anschlusskupplung an 2
- 4a: Gegenkupplung an 3
- 5: Seitenwand von 2
- 6: Einheit zur Erzeugung von 7
- 7: Druckluft-Nebelgas-Stroms
- 8: Anzeige- und Bedienfeld
- 8a: Fernsteuerung
- 9: Bauteil
- 10: Dach
- 11: Abdichtschicht
- 12: Auflage
- 12a: Humusauflage
- 12b: Kiesauflage
- 13: Sperrschicht
- 14: Dämmschicht
- 15: Spitze
- 16: Bodenwand
- 17: Betonschicht
- 18: Oberfläche von 11
- α: Winkel zwischen 3 und OTH
- D16: Abstand zwischen 4 und 16
- ET6: Einstechtiefe
- ET7: Einstechtiefe
- ET8: Einstechtiefe
- L3: Länge von 3
- OTH: Orthogonalen
- P6: 6-Uhr-Position
- P7: 7-Uhr-Position
- P8: 8-Uhr-Position

## Patentansprüche

1. Dichtigkeitsprüfungsanordnung (1) zur Prüfung von mit einer Abdichtschicht (11) bedeckten Bauteilen (9), insbesondere Dächern (10), Böden, Decken, Fassaden und wänden, umfassend einen Koffer (2), in welchem ein Druckluft-Nebelgas-Strom (7) erzeugbar ist, welcher zu einer nach außen gerichteten Anschlusskupplung (4) des Koffers (2) geführt ist, **dadurch gekennzeichnet, dass**
a) die Anschlusskupplung (4) an einer Seitenwand (5) des Koffers (2) angeordnet ist und mit einem starren Einstechrohr (3) Lösbar verbunden ist,
b) wobei das Einstechrohr (3) im angeschlossenen Zustand in einer drehfesten und starren Position (P6, P7, P8) an der Anschlusskupplung (4) bzw. am Koffer (2) fixiert ist,
c) wobei eine Spitze (15) des Einstechrohr (3)über den Koffer (2) um eine Einstechtiefe (ET6, EZ7, ET8) hervorsteht und
d) wobei das Einstechrohr (3) derart ausgebildet ist, dass es beim Aufsetzen oder Heranschieben des Koffers (2) auf die Oberfläche (18) des Bauteils (9) in die Abdichtschicht (11) eindringt und eine wasserdichte Sperrschicht (13) der Abdichtschicht (11) durchdringt.

2. Dichtigkeitsprüfungsanordnung nach Anspruch 1, **dadurch gekennzeichnet, dass** das Einstechrohr (3) an der Anschlusskupplung (4) mit unterschiedlichen Winkeln (α) zu der zu prüfenden Abdichtschicht (11) fixierbar ist.

3. Dichtigkeitsprüfungsanordnung nach Anspruch 1, **dadurch gekennzeichnet, dass** die Anschlusskupplung (4) an einer Wand, insbesondere an einer Seitenwand (4), des Koffers (2) in unterschiedliche Positionen verschiebbar ist.

4. Dichtigkeitsprüfungsanordnung nach Anspruch 1, **dadurch gekennzeichnet, dass** an dem Koffer (2) mehrere Anschlusskupplungen (4) in unterschiedlicher orthogonaler Entfernung zu der Abdichtschicht (11) auf welcher der Koffer (2) aufliegt, angeordnet sind.

5. Dichtigkeitsprüfungsanordnung nach Anspruch 1, **dadurch gekennzeichnet, dass** das Einstechrohr (3) teleskopierbar ist.

6. Dichtigkeitsprüfungsanordnung nach Anspruch 1, **dadurch gekennzeichnet, dass** die Dichtigkeitsprüfungsanordnung (1) mehrere Einstechrohre (3) mit unterschiedlicher Länge umfasst.

7. Dichtigkeitsprüfungsanordnung nach einem der vorhergehenden Ansprüche, **dadurch gekennzeichnet, dass** die Einstechtiefe (ET6, ET7, ET8), mit welcher das Einstechrohr (3) über den Koffer (2) hinaus orthogonal zu der zu prüfenden Abdichtschicht (11) bei einer gewählten Stellung (P6, P7, P8) in die Abdichtschicht (11) hineinragt, in Abhängigkeit von dem verwendeten Einstechrohr (3) an einer auf dem Koffer (2) befindlichen Tabelle ablesbar ist.

8. Dichtigkeitsprüfungsanordnung nach einem der vorhergehenden Ansprüche, **dadurch gekennzeichnet, dass** die Dichtigkeitsprüfungsanordnung (1) eine Fernsteuerung (8a) umfasst, mit welcher insbesondere das Einleiten des Druckluft-Nebelgas-Stroms (7) in die Abdichtschicht (11) steuerbar bzw. regelbar ist.

## Claims

1. Fluid tightness testing arrangement (1) for testing components (9) covered with a sealing layer (11), in particular roofs (10), floors, ceilings, façades and walls, comprising a case (2) in which a compressed air nebular gas flow (7) can be produced which is guided to an outwards directed connection coupling (4) of the case (2), **characterised in that**
a) the connection coupling (4) is arranged on a side wall (5) of the case (2) and is connected detachably to a rigid insertion pipe (3),
b) wherein the insertion pipe (3) in the connected state is fixed in a non-rotatable and rigid position (P6, P7, P8) on the connection coupling (4) or the case (2),
c) wherein a tip (15) of the insertion pipe (3) projects beyond the case (2) by an insertion depth (ET6, ET7, ET8) and
d) wherein the insertion pipe (3) is configured such that when fitting or pushing the case (2) onto the surface (18) of the component (9) it penetrates into the sealing layer (11) and passes through a watertight barrier layer (13) of the sealing layer (11).

2. Fluid tightness testing arrangement according to claim 1, **characterised in that** the insertion pipe (3) on the connection coupling (4) can be fixed at different angles (α) relative to the sealing layer (11) to be tested.

3. Fluid tightness testing arrangement according to claim 1, **characterised in that** the connection coupling (4) on a wall, in particular on a side wall (4) of the case (2) can be moved into different positions.

4. Fluid tightness testing arrangement according to claim 1, **characterised in that** on the case (2) a plurality of connection couplings (4) are arranged at a different orthogonal distance from the sealing layer (11) on which the case (2) rests.

5. Fluid tightness testing arrangement according to claim 1, **characterised in that** the insertion pipe (3) is telescopic.

6. Fluid tightness testing arrangement according to claim 1, **characterised in that** the tightness testing arrangement (1) comprises a plurality of insertion pipes (3) of different length.

7. Fluid tightness testing arrangement according to any one of the preceding claims, **characterised in that** the insertion depth (ET6, ET7, ET8) can be read off a table located on the case (2) by which the insertion pipe (3) projecting out over the case (2) orthogonally to the sealing layer (11) to be tested penetrates in a selected position (P6, P7, P8) into the sealing layer (11) depending on the insertion pipe (3) used.

8. Fluid tightness testing arrangement according to any one of the preceding claims, **characterised in that** the tightness testing arrangement (1) comprises a remote control (8a), by means of which in particular the introduction of the compressed air nebular gas flow (7) into the sealing layer (11) can be controlled or regulated.

## Revendications

1. Dispositif de contrôle d'étanchéité (1) pour vérifier des éléments de construction (9) recouverts d'une couche d'étanchéité (11), en particulier des toits (10), des sols, des plafonds, des façades et des parois, comportant un caisson (2) dans lequel peut être produit un flux nébulisé d'air sous pression (7) qui est transféré vers un raccord de liaison (4) du caisson (2) dirigé vers l'extérieur,
**caractérisé en ce que**
a) le raccord de liaison (4) est monté sur une paroi latérale (5) du caisson (2) et est relié de façon amovible à un tube perforateur (3),
b) à l'état fermé le tube perforateur (3) est fixé dans une position rigide et fixe en rotation (P6, P7, P8) sur le raccord de liaison (4) ou le caisson (2),
c) la pointe (15) du tube perforateur (3) dépasse du caisson (2) d'une profondeur de pénétration (ET6, ET7, ET8),
d) le tube perforateur (3) est réalisé de façon à pénétrer, en cas de positionnement ou de glissement du caisson (2) sur la surface (18) de l'élément (9), dans la couche d'étanchéité (11) et à traverser une couche de blocage étanche à l'eau (13) de la couche d'étanchéité (11).

2. Dispositif de contrôle d'étanchéité conforme à la revendication 1,
**caractérisé en ce que**
le tube perforateur (3) peut être fixé sur le raccord de liaison (4) avec des angle (α) différents par rapport à la couche d'étanchéité (11) à contrôler.

3. Dispositif de contrôle d'étanchéité conforme à la revendication 1,
**caractérisé en ce que**
le raccord de liaison (4) peut être déplacé sur une paroi, en particulier une paroi latérale (5) du caisson (2) dans différentes positions.

4. Dispositif de contrôle d'étanchéité conforme à la revendication 1,
**caractérisé en ce que**
sur le caisson (2) sont montés plusieurs raccords de liaison (4) situés à différentes distances orthogonales de la couche d'étanchéité (11) sur laquelle s'applique le caisson (2).

5. Dispositif de contrôle d'étanchéité conforme à la revendication 1,
**caractérisé en ce que**
le tube perforateur (3) est télescopique.

6. Dispositif de contrôle d'étanchéité conforme à la revendication 1,
**caractérisé en ce qu'**
il comporte plusieurs tubes perforateurs (3) de longueurs différentes.

7. Dispositif de contrôle d'étanchéité conforme à l'une des revendications précédentes,
**caractérisé en ce que**
la profondeur de pénétration (ET6, ET7, ET8) par laquelle le tube perforateur (3) pénètre au-delà du caisson (2) perpendiculairement à la couche d'étanchéité (11) à contrôler pour une position choisie (P6, P7, P8) peut être lue en fonction du tube perforateur (3) utilisé sur un tableau situé sur le caisson (2).

8. Dispositif de contrôle d'étanchéité conforme à l'une des revendications précédentes,
**caractérisé en ce qu'**
il comporte une commande à distance (8a) permettant de commander ou de régler en particulier l'introduction d'un flux nébulisé d'air sous pression (7) dans la couche d'étanchéité (11).
